# EUROPEAN PATENT APPLICATION

(11) **EP 4 714 619 A1**
(43) Date of publication of application: **25.03.2026**
(21) Application number: 24806894.2
(22) Date of filing: 08.04.2024
(51) Int. Cl.: B25J 15/08

(54) **GRIPPING DEVICE**

(30) Priority: 15.05.2023 JP 2023080334
(71) Applicant: HITACHI HIGH-TECH CORPORATION, Tokyo 105-6409 (JP)
(72) Inventor: IEDA, Ryoko, Tokyo 105-6409 (JP); YAMANAKA, Daichi, Tokyo 105-6409 (JP); TACHIBANA, Shinji, Tokyo 105-6409 (JP); KAMEI, Toshiaki, Tokyo 105-6409 (JP); OGAWARA, Shogo, Tokyo 105-6409 (JP)
(74) Representative: Strehl & Partner mbB
(86) International application number: PCT/JP2024/014256
(87) International publication number: WO 2024/236940

(57) **Abstract**

The purpose of the present disclosure is to provide a technique capable of stably gripping an object when the gripping mechanism is not suitable for gripping the object by sandwiching the object. A gripping device according to the present disclosure is provided with a gripping part that grips an object having a first hole and a second hole. The gripping part is provided with: a first rod-shaped member that positions the object by being inserted into the first hole; and a second rod-shaped member that prevents the object from rotating by being inserted into the second hole (see fig. 4B).

## Description

### Technical Field

The present disclosure relates to a gripping device.

### Background Art

Work automation by a robot is a useful way for improving work efficiency. Work performed by the robot varies depending on a target of the automation. A structure of the robot also has various aspects according to the various work. Here, a technique related to a workpiece positioning device suitable for delivering a workpiece to and from a transporting unit is disclosed (see PTL 1).

### Citation List

### Patent Literature

PTL 1: JP2006-341327A

### Summary of Invention

### Technical Problem

An automatic assembly facility used in a manufacturing process may grip and transport many types of assembly objects by a gripping device at a tip of a manipulator. Since a shape of an object that can be gripped by a gripping mechanism is limited, it is necessary to modify the gripping mechanism in accordance with the shape of the object. For example, when the gripping mechanism cannot grip the object by clamping the object, it is necessary to configure at least one of the gripping mechanism and the object such that gripping can be performed by a method other than clamping. Further, when the gripping is performed by a method other than clamping, it is necessary to fix a relative position and a relative posture between the gripping mechanism and the object. It is considered that PTL 1 does not fully consider a unit for gripping such an object.

The present disclosure has been made in view of the above problems, and an object of the present disclosure is to provide a technique capable of stably gripping an object when the gripping mechanism is not suitable for gripping the object by clamping.

### Solution to Problem

A gripping device according to the present disclosure includes a gripping portion configured to grip an object having a first hole and a second hole. The gripping portion includes: a first rod-shaped member to be inserted into the first hole to position the object; and a second rod-shaped member to be inserted into the second hole to prevent a rotation operation of the object.

### Advantageous Effects of Invention

The gripping device according to the present disclosure can stably grip an object when the gripping device is not suitable for gripping the object by clamping. Problems, configurations, advantages, or the like other than those described above will become apparent in the following description of embodiments.

### Brief Description of Drawings

[FIG. 1] FIG. 1 is a side view showing a situation in which a gripping device 1 is used.
[FIG. 2] FIG. 2 is a front view of the gripping device 1.
[FIG. 3] FIG. 3 is a top view of an object 2.
[FIG. 4A] FIG. 4A is a side view showing an intermediate process of an operation in which the gripping device 1 grips the object 2.
[FIG. 4B] FIG. 4B is a side view showing an intermediate process of the operation in which the gripping device 1 grips the object 2.
[FIG. 5] FIG. 5 is a diagram showing roles of second rod-shaped members 12a and 12b.
[FIG. 6] FIG. 6 is a diagram showing shapes of tips of the second rod-shaped members 12a and 12b.

### Description of Embodiments

### <Embodiment 1>

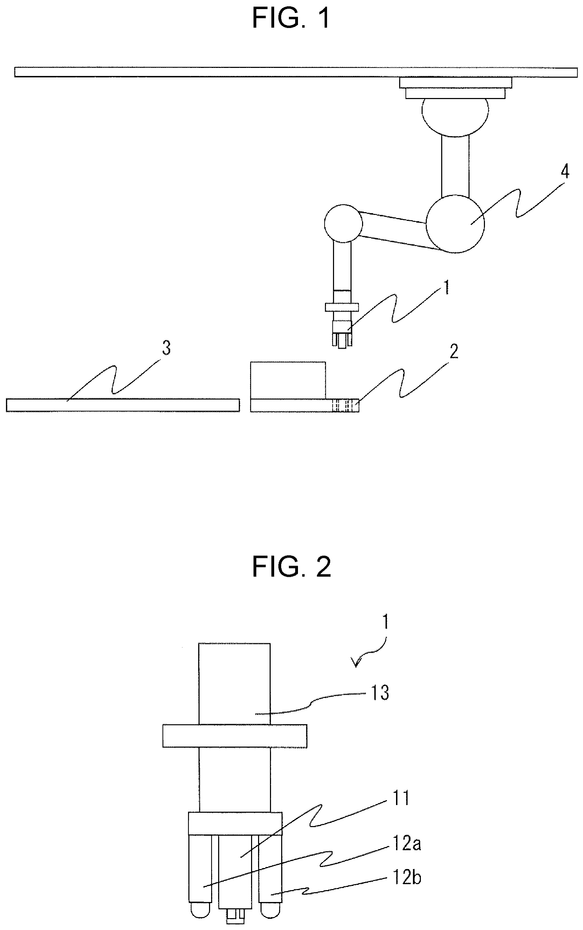

FIG. 1 is a side view showing a situation in which a gripping device 1 is used. The gripping device 1 is a device that grips an object 2. The gripping device 1 is attached to a tip of a manipulator 4. When the gripping device 1 grips the object 2, the manipulator 4 transports the object 2 and the gripping device 1 toward a transport destination 3.

It is desirable that the gripping device 1 stably grips the object 2 while transporting the object 2. In other words, it is desirable that a relative position between the gripping device 1 and the object 2 is fixed and a relative posture between the gripping device 1 and the object 2 is fixed while the gripping device 1 grips and transports the object 2. For example, it is desirable that the object 2 does not rotate while the gripping device 1 grips the object 2.

As a method for the gripping device 1 to grip the object 2, for example, it is conceivable that the object 2 is clamped between two members. However, depending on a property of the object 2, the clamping may cause an adverse effect. For example, when the object 2 is brittle, the object 2 may be damaged by being clamped. Alternatively, due to restrictions on equipment or the like, it is necessary to reduce a size and weight of the gripping device 1, and a clamping type gripping method may not be suitable. The present embodiment provides a method capable of appropriately gripping even such the object 2.

FIG. 2 is a front view of the gripping device 1. The gripping device 1 includes a first rod-shaped member 11, second rod-shaped members 12a and 12b, and a flange 13. The first rod-shaped member 11, the second rod-shaped member 12a, and the second rod-shaped member 12b are rod-shaped members disposed so as to protrude from a tip surface of the flange 13 along an extending direction of the flange 13.

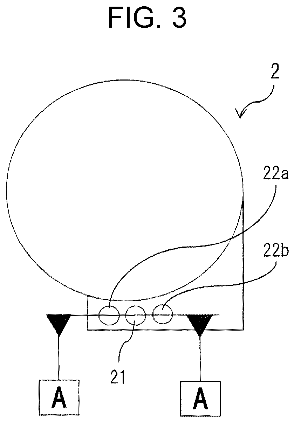

FIG. 3 is a top view of the object 2. The object 2 has a structure suitable for the gripping device 1 to grip. Specifically, the object 2 includes a first hole 21 and second holes 22a and 22b. The first hole 21, the second hole 22a, and the second hole 22b are aligned on a same straight line. A cross section taking along AA in FIG. 3 will be described later.

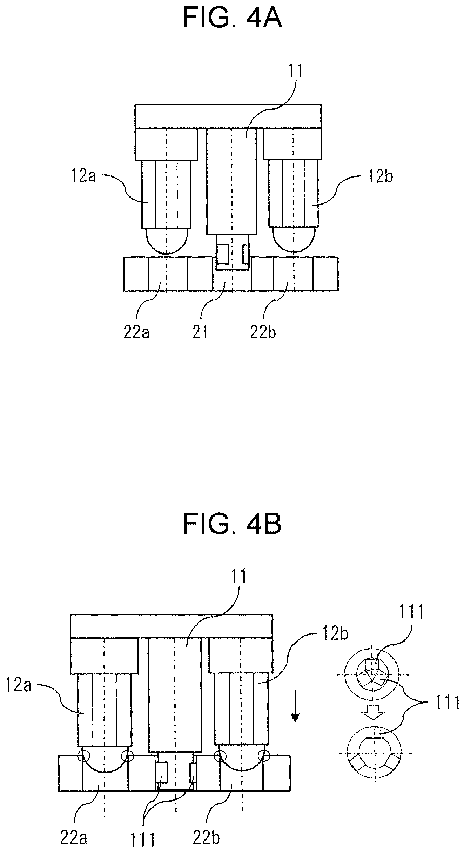

FIG. 4A is a side view showing an intermediate process of an operation in which the gripping device 1 grips the object 2. FIG. 4A corresponds to a cross-sectional view along AA in FIG. 3. When gripping the object 2, the gripping device 1 descends from an upper side of the object 2. The gripping device 1 is positioned and then moved such that (a) the first rod-shaped member 11 is inserted into the first hole 21, (b) the second rod-shaped member 12a is inserted into the second hole 22a, and (c) the second rod-shaped member 12b is inserted into the second hole 22b.

FIG. 4B is a side view showing an intermediate process of the operation in which the gripping device 1 grips the object 2. As the gripping device 1 is lowered toward the object 2 subsequently to FIG. 4A, the first rod-shaped member 11 is completely inserted into the first hole 21 (a tip of the first rod-shaped member 11 reaches a bottom surface of the first hole 21), and tip portions of the second rod-shaped member 12a and the second rod-shaped member 12b are inserted into a second hole 21a and a second hole 21b, respectively. That is, the respective rod-shaped members and the respective holes are positioned such that when the first rod-shaped member 11 is completely inserted into the first hole 21, tips of the second rod-shaped members 12a and 12b are also inserted into the second holes 22a and 22b, respectively.

A right diagram of FIG. 4B is a bottom view of the first rod-shaped member 11. Protruding members 111 are attached to the tip of the first rod-shaped member 11. The protruding members 111 can protrude from a side surface of the first rod-shaped member 11 along a radial direction of the first rod-shaped member 11. When the first rod-shaped member 11 is completely inserted into the first hole 21, the protruding members 111 protrude from the side surface of the first rod-shaped member 11. The right diagram of FIG. 4B shows a process thereof.

As the protruding members 111 protrude, the protruding members 111 come into contact with an inner wall of the first hole 21, thereby pressing the first rod-shaped member 11 against the inner wall of the first hole 21, so that the object 2 can be gripped from an inside of the first hole 21. Although three protruding members 111 are disposed in FIG. 4B, at least two protruding members 111 may be disposed, and four or more protruding members 111 may be disposed.

From a viewpoint of inserting the first rod-shaped member 11 into the first hole 21, a diameter of at least a tip portion of the first rod-shaped member 11 is smaller than a diameter of the first hole 21. Similarly, from a viewpoint of inserting the second rod-shaped member 12a into the second hole 22a, a diameter of at least the tip portion of the second rod-shaped member 12a is smaller than a diameter of the second hole 22a. The same applies to the second rod-shaped member 12b.

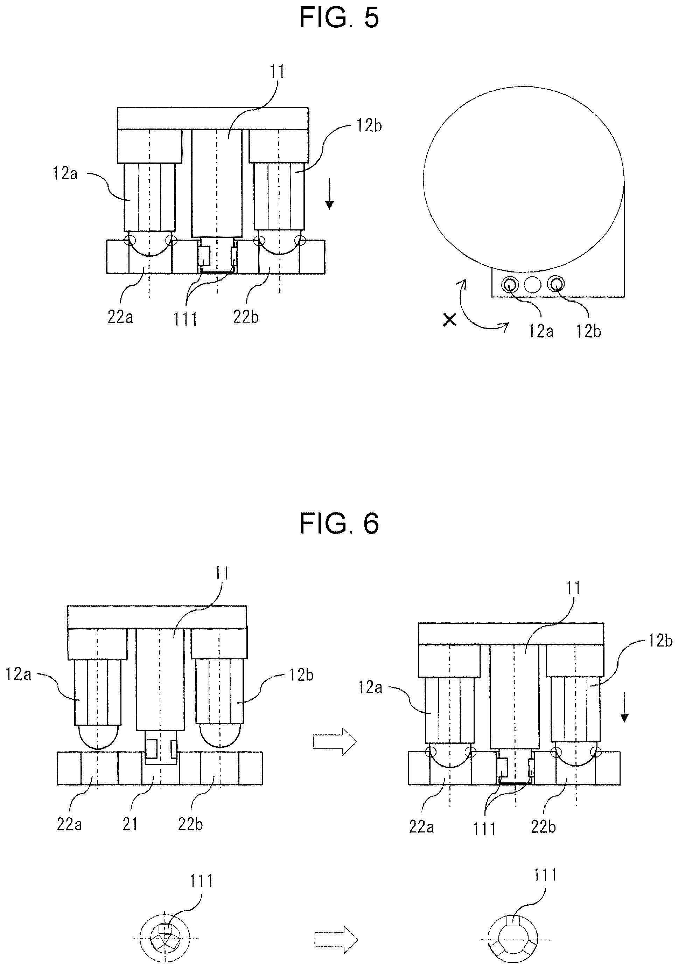

FIG. 5 is a diagram showing roles of the second rod-shaped members 12a and 12b. When the protruding members 111 protrude and the first rod-shaped member 11 grips the object 2, the object 2 may rotate about the first rod-shaped member 11 as the center of rotation. The second rod-shaped members 12a and 12b have a role of preventing such rotation.

Specifically, when the tip of the first rod-shaped member 11 is inserted into the first hole 21 (that is, when the protruding members 111 are inserted into first hole 21), the tips of second rod-shaped members 12a and 12b are also inserted into the second holes 22a and 22b, respectively. Accordingly, the second rod-shaped member 12a, the first rod-shaped member 11, and the second rod-shaped member 12b are arranged in this order in the same straight line, and a rotational motion about the first rod-shaped member 11 as the center of rotation is prevented. Therefore, it is possible to stably grip the object 2 while preventing the rotational motion as indicated by an arrow in FIG. 5 from occurring.

FIG. 6 is a diagram showing shapes of the tips of the second rod-shaped members 12a and 12b. The second rod-shaped members 12a and 12b do not necessarily have to be completely inserted into the second holes 22a and 22b, and it is sufficient that the tips of the second rod-shaped members 12a and 12b are partially inserted into the second holes 22a and 22b. This is because the second rod-shaped members 12a and 12b are intended to prevent the rotational motion described in FIG. 5. Therefore, the second rod-shaped members 12a and 12b may be shorter than the first rod-shaped member 11. In the example shown in FIG. 6, the second rod-shaped members 12a and 12b have substantially the same length, and when the first rod-shaped member 11 is completely inserted into the first hole 21, only the tip portions of the second rod-shaped members 12a and 12b are inserted into the second holes 22a and 22b, respectively.

Since the second rod-shaped member 12a has the role of preventing the object 2 from rotating, it is desirable that a relative position between the second rod-shaped member 12a and the object 2 does not change when the second rod-shaped member 12a is inserted into the second hole 22a. For example, the tip portion of the second rod-shaped member 12a is the thinnest at the tip and gradually become thicker toward a root. A diameter of a thickest portion of the tip portion of the second rod-shaped member 12a is larger than the diameter of the second hole 22a. Since the tip of the second rod-shaped member 12a is thin, the second rod-shaped member 12a can be smoothly inserted into the second hole 22a. Further, since a thicker portion of the tip of the second rod-shaped member 12a comes into contact with an inner wall of the second hole 22a, the relative position between the second rod-shaped member 12a and the object 2 does not change, and the object 2 can be stably gripped. The second rod-shaped member 12b also exhibits the same effect.

A shape of the tip portion of the second rod-shaped member 12a and a shape of an opening of the second hole 21a are not necessarily the same or similar, and may be any shapes that allow at least the tip of the second rod-shaped member 12a and the inner wall of the second hole 21a to come into contact with each other. The same applies to the second rod-shaped member 12b. In the example of FIG. 6, the tip portion of the second rod-shaped member 12a and the shape of the opening of the second hole 21a are circular, and a diameter of the thickest portion of the tip portion of the second rod-shaped member 12a is larger than an opening diameter of the second hole 21a.

The tip of the second rod-shaped member 12a can have, for example, a spherical shape, so that the tip is thinnest and the thickness increases toward the root. The shape is not necessarily a strict spherical shape, and may be, for example, an elliptical spherical shape. That is, the tip of the second rod-shaped member 12a may be formed by a curved surface, and at least a part thereof may have a rotationally symmetrical shape. The same applies to the second rod-shaped member 12b.

### <Embodiment 2>

In Embodiment 1, it is described that three protruding members 111 are disposed along an outer periphery of the side surface of the first rod-shaped member 11. In this case, it is desirable that angular intervals among the protruding members 111 are uniform (that is, the protruding members 111 are disposed every 120° in the right diagram of FIG. 4B). An arrangement of the three protruding members 111 is advantageous in that a center axis of the first rod-shaped member 11 and a center axis of the first hole 21 can be easily aligned. When there are two protruding members 111, it is difficult to stably fix the first rod-shaped member 11, and thus it may be difficult to align the center axes. When there are four or more protruding members 111 (that is, the number is excessively large), a protruding amount of each protruding member 111 is likely to vary, and thus it may be difficult to align the center axes. Therefore, it is considered desirable to provide about three protruding members 111.

Although the first rod-shaped member 11 is one as described in Embodiment 1, the object 2 may be gripped using two or more first rod-shaped members 11. However, when two or more first rod-shaped members 11 are provided, the weight and size of the gripping device 1 are increased by an amount thereof, and thus when the gripping device 1 is subject to these constraints, it is desirable that the number of first rod-shaped members 11 is as small as possible. For example, when the clamping type gripping device cannot be used due to spatial or weight restrictions, it is considered that it is desirable that only one first rod-shaped member 11 is provided.

In Embodiment 1, the tip of the second rod-shaped member 12a may not necessarily have a curved surface shape as long as the tip is thin and the thickness gradually increases toward the root. For example, a tapered shape such as a cone or a pyramid may be used. An advantage of using the curved surface shape is that damage to a wall portion of the second hole 22a can be prevented when the second rod-shaped member 12a and the second hole 22a are in contact with each other. The same applies to the second rod-shaped member 12b.

In Embodiment 1, when the tip of the first rod-shaped member 11 is inserted into the first hole 21 and reaches the bottom surface of the first hole 21 (state in FIG. 4B), the tip of the second rod-shaped member 12a is located slightly above a bottom surface of the second hole 22a. The invention is not limited thereto, and the tip of the second rod-shaped member 12a may also reach the bottom surface of the second hole 22a (that is, a length of the first rod-shaped member 11 and a length of the second rod-shaped member 12a are substantially equal). However, in order to strictly align tip positions of the rod-shaped members when the rod-shaped members reach a lowermost position, appropriate manufacturing accuracy and control accuracy are required (for example, the tip positions are not aligned when the object 2 and the gripping device 1 are inclined with respect to each other). Therefore, when the tip of the first rod-shaped member 11 reaches the tip of the first hole 21, it is desirable to allow the tip of the second rod-shaped member 12a to be located slightly above the bottom surface of the second hole 22a. The same applies to the second rod-shaped member 12b.

In Embodiment 1, lengths of the second rod-shaped members 12a and 12b are not necessarily the same, and one of the second rod-shaped members 12a and 12b may be shorter than the other. For example, when the second rod-shaped member 12a is longer than the second rod-shaped member 12b, the gripping device 1 is positioned by first aligning the first rod-shaped member 11 and the second rod-shaped member 12a with respect to the first hole 21 and the second hole 22a, respectively. This is because these two members come into contact with the object 2 prior to the second rod-shaped member 12b. Since the positioning between the second rod-shaped member 12b and the second hole 22b is performed under an assumption that the two preceding rod-shaped members are positioned, the positioning is performed in a substantially aligned state. In other words, when one of the second rod-shaped members 12a and 12b is longer than the other, it is sufficient to first perform positioning for the two rod-shaped members and the two holes, which has an advantage in that the positioning is easier as compared with a case where positioning is performed simultaneously for all of the three rod-shaped members and the three holes.

In Embodiment 1, it is described that the second rod-shaped members 12a and 12b are provided, but only the second rod-shaped member 12a (or 12b) may be provided. When there is only one second rod-shaped member, a load on the gripping device 1 when gripping the object 2 is large, and thus it is desirable to provide two second rod-shaped members. Although it is also possible to provide three or more second rod-shaped members, it should be noted that the number of second rod-shaped members needs to be set within an allowable range since the size and weight of the gripping device 1 are increased accordingly.

In Embodiment 1, it is described that the first hole 21 to the second hole 22b are aligned on the straight line. Alternatively, for example, these holes may be aligned on a curved line. However, there is a case where a position or an area where these holes can be provided on the object 2 is restricted. When these holes are aligned on a straight line, the object 2 can be gripped without being subjected to such restrictions as much as possible. This is because an area occupied by the straight line is small. In addition, it is desirable to align the holes on a straight line from a viewpoint of ease of manufacturing.

It should be noted that the configurations described in the present embodiment may be used in combination.

### <Regarding Modifications of Disclosure>

The disclosure is not limited to the above embodiments and includes various modifications. For example, the above embodiments are described in detail to facilitate understanding of the disclosure, and it is not necessary to include all the configurations described above. A part according to one embodiment can be replaced with a configuration according to another embodiment. A configuration according to another embodiment may be added to a configuration according to one embodiment. A part of a configuration according to each embodiment may be added to, deleted from, or replaced with a part of a configuration according to another embodiment.

In the above embodiments, it has been described that the first rod-shaped member 11 includes the protruding members 111, and the protruding members 111 protrude to grip the object 2. Other gripping mechanisms may be used instead of or in combination with the protruding member 111. For example, a similar gripping function can be provided by another mechanism for expanding the first rod-shaped member 11 along the radial direction.

### Reference Signs List

1: gripping device
11: first rod-shaped member
12a: second rod-shaped member
12b: second rod-shaped member
2: object
21: first hole
22a: second hole
22b: second hole

## Claims

1. A gripping device comprising:
a gripping portion configured to grip an object having a first hole and a second hole, wherein
the gripping portion includes
a first rod-shaped member to be inserted into the first hole to position the gripping portion and the object relative to each other, and
a second rod-shaped member to be inserted into the second hole to prevent a relative rotational motion between the gripping portion and the object.

2. The gripping device according to claim 1, wherein
the first rod-shaped member is configured to expand in a radial direction of the first rod-shaped member after being inserted into the first hole.

3. The gripping device according to claim 1, wherein
the second rod-shaped member has a portion whose diameter increases from a tip toward a rear end of the second rod-shaped member, and is configured to be inserted into the second hole from the tip of the second rod-shaped member.

4. The gripping device according to claim 2, wherein
a tip of the first rod-shaped member includes a protruding member configured to protrude from a surface of the first rod-shaped member along the radial direction of the first rod-shaped member, and
the first rod-shaped member is configured to expand in the radial direction of the first rod-shaped member after being inserted into the first hole, by the protruding member protruding from the surface of the first rod-shaped member.

5. The gripping device according to claim 4, wherein
the first rod-shaped member has three of the protruding members along an outer periphery of the first rod-shaped member.

6. The gripping device according to claim 5, wherein
the protruding members are arranged at 120° intervals along the outer periphery of the first rod-shaped member.

7. The gripping device according to claim 3, wherein
the portion is formed by a curved surface that is at least partially rotationally symmetric, and
a diameter of the curved surface is larger than a diameter of the second hole.

8. The gripping device according to claim 1, wherein
the first rod-shaped member and the second rod-shaped member are configured such that when a tip of the first rod-shaped member is inserted into the first hole and reaches a bottom surface of the first hole, a tip of the second rod-shaped member is also inserted into the second hole.

9. The gripping device according to claim 8, wherein
the first rod-shaped member and the second rod-shaped member are configured such that when the tip of the first rod-shaped member is inserted into the first hole and reaches the bottom surface of the first hole, the tip of the second rod-shaped member reaches a bottom surface of the second hole or is positioned above the bottom surface of the second hole.

10. The gripping device according to claim 1, wherein
the object has a third hole, and
the gripping portion includes a third rod-shaped member to be inserted into the third hole to prevent a relative rotational motion between the gripping portion and the object.

11. The gripping device according to claim 10, wherein
the second rod-shaped member is longer than the third rod-shaped member such that the second rod-shaped member comes into contact with the object before the third rod-shaped member does when the gripping device grips the object, and
when gripping the object, the gripping device first positions the first rod-shaped member with respect to the first hole and also positions the second rod-shaped member with respect to the second hole, and then positions the third rod-shaped member with respect to the third hole.

12. The gripping device according to claim 10, wherein
the first hole, the second hole, and the third hole are aligned on a same straight line, and
the first rod-shaped member, the second rod-shaped member, and the third rod-shaped member are configured such that when a tip of the first rod-shaped member is inserted into the first hole, a tip of the second rod-shaped member is inserted into the second hole at the same time, and further, a tip of the third rod-shaped member is inserted into the third hole at the same time.

## Amended claims

### Amended claims in accordance with Rule 137(2) EPC.

1. A gripping device comprising:
a gripping portion configured to grip an object having a first hole and a second hole, wherein
the gripping portion includes
a first rod-shaped member to be inserted into the first hole to position the gripping portion and the object relative to each other, and
a second rod-shaped member to be inserted into the second hole to prevent a relative rotational motion between the gripping portion and the object,
the object has a third hole,
the gripping portion includes a third rod-shaped member to be inserted into the third hole to prevent a relative rotational motion between the gripping portion and the object,
the second rod-shaped member is longer than the third rod-shaped member such that the second rod-shaped member comes into contact with the object before the third rod-shaped member does when the gripping device grips the object, and
when gripping the object, the gripping device first positions the first rod-shaped member with respect to the first hole and also positions the second rod-shaped member with respect to the second hole, and then positions the third rod-shaped member with respect to the third hole.

2. The gripping device according to claim 1, wherein
the first rod-shaped member is configured to expand in a radial direction of the first rod-shaped member after being inserted into the first hole.

3. The gripping device according to claim 1, wherein
the second rod-shaped member has a portion whose diameter increases from a tip toward a rear end of the second rod-shaped member, and is configured to be inserted into the second hole from the tip of the second rod-shaped member.

4. The gripping device according to claim 2, wherein
a tip of the first rod-shaped member includes a protruding member configured to protrude from a surface of the first rod-shaped member along the radial direction of the first rod-shaped member, and
the first rod-shaped member is configured to expand in the radial direction of the first rod-shaped member after being inserted into the first hole, by the protruding member protruding from the surface of the first rod-shaped member.

5. The gripping device according to claim 4, wherein
the first rod-shaped member has three of the protruding members along an outer periphery of the first rod-shaped member.

6. The gripping device according to claim 5, wherein
the protruding members are arranged at 120° intervals along the outer periphery of the first rod-shaped member.

7. The gripping device according to claim 3, wherein
the portion is formed by a curved surface that is at least partially rotationally symmetric, and
a diameter of the curved surface is larger than a diameter of the second hole.

8. The gripping device according to claim 1, wherein
the first rod-shaped member and the second rod-shaped member are configured such that when a tip of the first rod-shaped member is inserted into the first hole and reaches a bottom surface of the first hole, a tip of the second rod-shaped member is also inserted into the second hole.

9. The gripping device according to claim 8, wherein
the first rod-shaped member and the second rod-shaped member are configured such that when the tip of the first rod-shaped member is inserted into the first hole and reaches the bottom surface of the first hole, the tip of the second rod-shaped member reaches a bottom surface of the second hole or is positioned above the bottom surface of the second hole.

12. The gripping device according to claim 1, wherein
the first hole, the second hole, and the third hole are aligned on a same straight line, and
the first rod-shaped member, the second rod-shaped member, and the third rod-shaped member are configured such that when a tip of the first rod-shaped member is inserted into the first hole, a tip of the second rod-shaped member is inserted into the second hole at the same time, and further, a tip of the third rod-shaped member is inserted into the third hole at the same time.
